# FASCICULE DE BREVET EUROPEEN

(11) **EP 2 955 002 B1**
(45) Date de publication et mention de la délivrance du brevet: **29.08.2018**
(21) Numéro de dépôt: 15170318.8
(22) Date de dépôt: 02.06.2015
(51) Int. Cl.: B29C 65/16, F21S 41/20, F21S 41/29

(54) **BOÎTIER POUR LA RÉALISATION D'UN FEU DE VÉHICULE AUTOMOBILE**
GEHÄUSE ZUR HERSTELLUNG EINES KRAFTFAHRZEUG-SCHEINWERFERS
HOUSING FOR THE PRODUCTION OF A VEHICLE HEADLIGHT

(30) Priorité: 10.06.2014 FR 1455203
(43) Date de publication de la demande: 16.12.2015
(73) Titulaire: VALEO ILUMINACION, 23600 Martos (ES)
(72) Inventeur: CHOTARD, Alexandre, 23600 Martos (Jaén) (ES); GONZALEZ HIGUERAS, Rafael, 23600 MARTOS (ES); PEREZ CARRERAS, Eduardo, 23600 MARTOS (ES); JIMENEZ VILLAR, Miguel Angel, 23600 MARTOS (ES)

(56) Documents cités:
- JP-A- 2010 214 730
- JP-A- 2013 196 891
- SCHMAILZL ANTON ET AL: "Optimierung der Spanndruckverteilung beim Laserurhstrahlschweissen komplexer Bauteile mittels FE-Berechnung = Using FE calculation for the optimisation of the clamping pressure distribution in the case of the laser transmission welding of complex components", JOINING PLASTICS - FÜGEN VON KUNSTSTOFFEN,, vol. 7, no. 1, 1 January 2013 (2013-01-01) , pages 30-34, XP001586475, ISSN: 1864-3450

## Description

Le domaine de la présente invention est celui de l'équipement des véhicules automobiles et, plus particulièrement, celui des feux pour l'éclairage et/ou la signalisation de ces véhicules.

Les modules lumineux, par exemple les feux, des véhicules automobiles sont des ensembles à l'intérieur desquels on trouve, notamment, une ou plusieurs sources lumineuses, en général un réflecteur pour renvoyer vers l'extérieur le faisceau lumineux créé par cette ou ces sources, et des moyens de contrôle de la forme de ce faisceau. Ces éléments sont enfermés dans un boîtier qui porte une glace transparente au travers de laquelle passe le faisceau. Le boîtier et la glace sont généralement réalisés dans des matériaux polymères, et sont assemblés l'un à l'autre de façon à garantir l'étanchéité de l'ensemble vis-à-vis de l'extérieur et notamment vis-à-vis des intempéries. L'assemblage de ces deux pièces, qui était auparavant réalisé par collage, tend de plus en plus à être réalisé par soudage, ce qui assure une meilleure garantie d'étanchéité, cette option étant rendue possible par le choix des matériaux utilisés.

Les machines de soudage généralement utilisées comportent un outil-support, sur lequel sont déposées une première bride qui s'étend tout le long de la périphérie du boîtier, communément appelée collet par l'homme du métier, et une seconde bride constituée par le bord externe de la glace. Un moyen de chauffage, tel qu'une plaque chauffante, une plaque vibrante ou une tête laser, est associé à cet outil pour faire fondre les deux pièces mises en contact et assurer leur solidarisation. Un moyen préférentiel est le soudage par laser qui présente l'avantage d'un positionnement précis et donc d'une largeur de soudure parfaitement contrôlée. La technique associée au soudage laser consiste à émettre un rayon qui traverse la glace du fait de sa transparence et qui vient chauffer la face supérieure du boîtier pour le faire fondre localement. La chaleur absorbée par le boîtier est restituée en partie à la glace qui fond également et qui vient se mélanger à la phase liquide ou pâteuse du boîtier pour former le joint de soudure.

On connait par le document JP2013196891 une méthode de soudage laser d'une glace sur un boîtier avec une collerette comportant sur sa face supérieure un ressaut ayant une forme en S à l'aide d'un gabarit contrôlant l'orientation du faisceau laser.

Le boîtier a une forme essentiellement convexe, de laquelle s'étendent des parois en direction du haut. Au bout de ces parois se trouve un collet périphérique qui porte une nervure de soudage dont le but, en formant une protubérance, est de fournir de la matière pour le soudage de la glace transparente.

Les concepteurs des véhicules modernes ont tendance à varier les formes extérieures de ces véhicules et, en particulier, à faire évoluer le design de leurs modules lumineux. Pour certains de ceux-ci, et notamment dans les retours d'aile, la glace n'a pas une forme arrondie continue mais elle présente des marches en escalier. Si cette forme est relativement facile à réaliser par moulage, que ce soit pour la glace ou pour le boîtier, le soudage laser de ces deux éléments présente, en revanche, une difficulté particulière.

En effet, il est essentiel que les deux pièces restent, sinon en contact franc lors du passage du faisceau laser, du moins qu'elles ne soient pas trop éloignées l'une de l'autre afin que la chaleur reçue par la face supérieure du boitier se transmette bien à la glace et la fasse fondre.

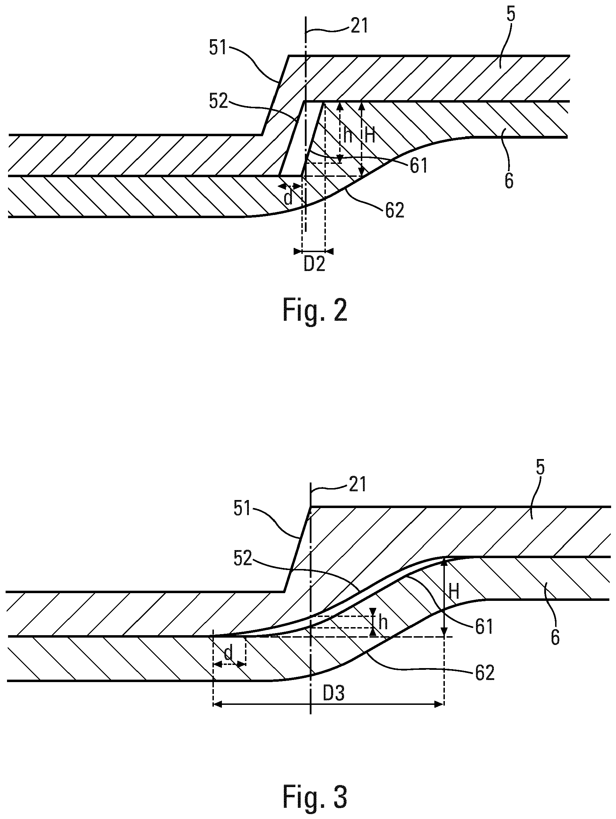

Or, du fait des tolérances de fabrication des deux pièces il peut se produire un petit décalage longitudinal entre la position d'un ressaut sur la périphérie de la glace et celle du ressaut correspondant sur le boîtier. Si l'écart horizontal généré par ces tolérances entre les flancs des deux ressauts reste faible, l'écart vertical entre la face inférieure de la glace et la face supérieure du boîtier peut être alors important, notamment dans le cas de ressauts dont les flancs sont proches de la verticale, comme cela sera expliqué plus en détail en référence à la figure 2. Le faisceau laser traverse alors une zone sans matière entre le ressaut de la glace et celui du boîtier et le soudage ne se fait pas dans cette zone.

La présente invention a pour but de remédier à ces inconvénients en proposant une forme particulière pour la glace et le boîtier qui n'empêche pas leur soudage respectif, tout en permettant à la glace de présenter une face supérieure en escalier.

A cet effet, l'invention a pour objet un boîtier suivant la revendication 1. La forme en S de la face inférieure de la glace, qui est différente de celle de la face supérieure, permet de minimiser l'écart vertical entre face inférieure de la glace et face supérieure du boitier et par là même d'améliorer leur soudage.

Avantageusement le premier ressaut présente un profil identique à celui du second ressaut.

Avantageusement le premier ressaut présente un profil plan.

Avantageusement la face supérieure présente deux parties majoritairement planes de part et d'autre du premier ressaut.

Avantageusement la face inférieure présente deux parties majoritairement planes de part et d'autre du premier ressaut.

Avantageusement la forme en S présente un profil continu en tout point de cette forme.

Alternativement, la forme en S présente au moins trois portions, dont deux sont tangentes à la face inférieure, respectivement de part et d'autre de ladite forme en S, la troisième portion étant plane et s'étendant entre lesdites deux portions.

Avantageusement le second ressaut s'étend longitudinalement au niveau du premier ressaut de sa face supérieure.

Avantageusement ledit premier ressaut se caractérisant par son élévation verticale H sur une distance longitudinale D, ledit second ressaut se caractérise par un rapport entre son élévation verticale et la distance longitudinale correspondante, qui est inférieur ou égal à celui de ladite face supérieure.

En présentant un rapport sur sa face inférieure qui est inférieur à celui de la face supérieure, la face inférieure est plus couchée longitudinalement. Un décalage longitudinal se traduira alors par un moindre écart vertical et il sera possible de mieux faire approcher cette face inférieure par un boîtier dont la face supérieure présente la même inclinaison.

De façon plus préférentielle, la forme en S se raccorde au plan de la face inférieure en restant positionnée entre les tangentes à cette face de chaque côté dudit second ressaut.

La configuration ci-dessus permet que l'écart vertical entre la face inférieure de la glace et une face identique qui serait légèrement décalée longitudinalement par rapport à elle, sera minime.

Dans une forme particulière de réalisation le rayon de courbure de ladite forme est, en tout point du second ressaut, supérieur ou égal à 5 mm. Cette valeur correspond à la distance verticale maximale acceptable pour le soudage laser d'une glace sur un boîtier de module lumineux de véhicule, compte tenu du décalage nominal dû aux tolérances de fabrication nominales constatées pour ces éléments et d'une hauteur de ressaut de l'ordre de 4 mm, comme cela se rencontre couramment pour des glaces de module lumineux.

Dans un mode particulier de réalisation la face inférieure dudit boîtier évolue longitudinalement, au niveau dudit troisième ressaut, en restant sensiblement parallèle à ladite face supérieure.

Dans un autre mode particulier de réalisation la face inférieure dudit boîtier évolue longitudinalement, au niveau dudit troisième ressaut, en s'écartant sensiblement de ladite face supérieure.

L'invention porte enfin sur un module, notamment lumineux, pour véhicule automobile réalisé par soudage, notamment soudage laser, d'une glace telle que décrite ci-dessus, sur un boîtier tel que celui décrit ci-dessus.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue de côté, en coupe partielle, d'un poste de soudage laser du boîtier d'un module lumineux de véhicule ;
- la figure 2 est une vue en coupe d'une glace et d'un boîtier d'un module lumineux de véhicule, selon l'art antérieur, en position pour le soudage ;
- la figure 3 est une vue en coupe d'une glace et d'un boîtier d'un module lumineux de véhicule, selon l'invention, en position pour le soudage.

Dans la suite de la description les directions verticale, supérieure ou inférieure, s'entendent en référence à la direction du faisceau laser et de la force d'appui qui est appliquée pour solidariser le boîtier avec la glace. Les directions latérale ou transversale s'entendent comme une direction, dans un plan horizontal, qui est perpendiculaire à la direction d'avancement de la tête laser.

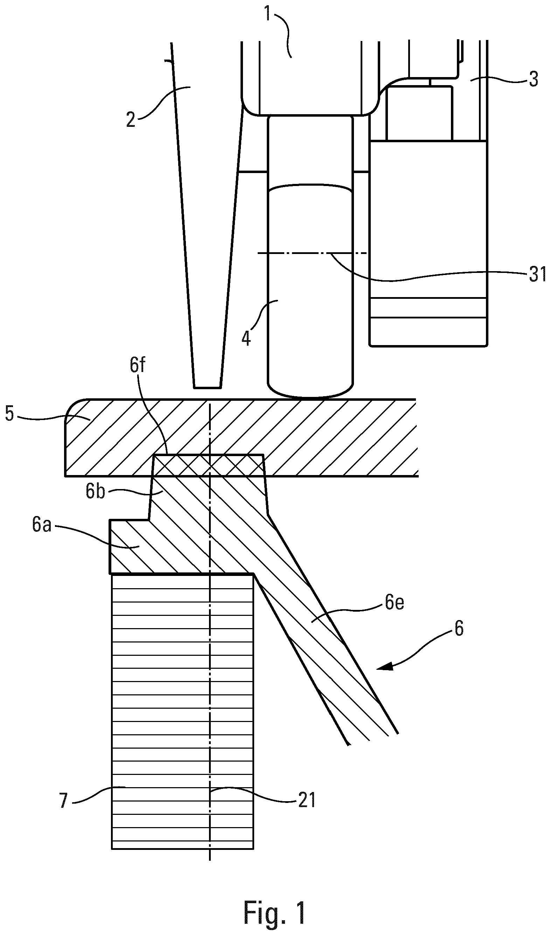

En se référant à la figure 1, on voit une machine de soudage laser comprenant un bâti 1 conformé pour se déplacer longitudinalement en décrivant la forme extérieure d'un boîtier de module, notamment un module lumineux, de véhicule, à souder. Ce bâti porte une tête laser (non représentée) qui émet un faisceau 2 orienté verticalement, c'est-à-dire, ici, vers le bas de la figure, le long d'un axe 21. Il comporte également une extension verticale 3 située latéralement par rapport à ce faisceau, sur laquelle est fixé un axe de rotation transversal 31. Cet axe porte une roulette 4 qui est entraînée en rotation par le déplacement du bâti 1, en restant parallèle au faisceau laser 2. Le bâti 1 génère une force d'appui sur la roulette 4 pour maintenir l'un contre l'autre, un boîtier 6 d'un module lumineux et une glace 5 de fermeture du boîtier. Sur la figure est représentée l'extrémité latérale de la glace 5, qui est en position sur le bâti 1 pour être soudée sur un collet 6a du boîtier 6.

Alors que l'extrémité latérale de la glace 5 comporte deux faces, supérieure et inférieure, sensiblement planes et parallèles, le boîtier 6 comporte des parois 6e qui s'enfoncent sensiblement verticalement pour former un volume interne dans lequel seront positionnés les équipements du module lumineux. La paroi 6e se termine vers l'extérieur par un collet périphérique 6a qui est positionné sur le bâti 1 parallèlement à l'extrémité de la glace 5. Le terme périphérique signifie, ici, que le collet s'étend partiellement ou totalement sur le pourtour du boîtier. Ce collet 6a porte sur sa face supérieure, c'est-à-dire la face en contact avec la face inférieure de la glace, une nervure de soudage 6b qui s'étend à partir du collet en formant une protubérance et qui a pour objet de fournir de la matière pour le soudage de la glace 5. Telle qu'elle est représentée sur la figure, cette nervure de soudage 6b s'intègre dans la glace 5, pour indiquer que les matières des deux pièces s'entremêlent lors du soudage. Elle court, de préférence, tout le long du collet périphérique 6a du boîtier 6, en étant sur tout ce parcours en contact avec la face inférieure de la glace 5, de façon à assurer la continuité du soudage et, in fine, l'étanchéité du module lumineux.

Une pièce de support 7 est positionnée sous le collet 6a du boîtier 6 et sert de soutien au boîtier et à la glace, qui sont pressés contre elle par la roulette 4.

Les figures 2 et 3 montrent, en coupe longitudinale, c'est-à-dire selon la périphérie du boîtier, la glace 5 qui comporte, à au moins un endroit, un ressaut en escalier qui s'étend à partir de sa face supérieure 51, et qui est posée sur le boîtier 6 pour y être fixée par soudage laser à l'aide de la machine de soudage de la figure 1. Un ressaut est caractérisé dans la suite de la description par la hauteur H de son élévation verticale, qui se développe sur une longueur horizontale D.

Sur la figure 2 sont représentés une glace et un boîtier de l'art antérieur, c'est-à-dire une glace 5 et un boîtier 6 qui présentent tous deux, sur le cheminement longitudinal de leur périphérie, un ressaut identique à celui de la face supérieure 51 de la glace 5. La face inférieure 52 de cette glace présente la même forme en ressaut que sa face supérieure, c'est-à-dire une élévation H sur une longueur D2, du fait de la pratique courante qui prévoit une épaisseur sensiblement constante pour cette glace afin de minimiser la quantité de matière mise en oeuvre. La face supérieure 61 du collet du boîtier 6 présente, elle aussi, le même ressaut (caractérisé par H et D2) que la face inférieure 52 de la glace pour tenter de rester en contact avec celle-ci sur toute la périphérie du collet du boîtier 6. Quant à la face inférieure 62 du boîtier 6, elle présente une forme sans rapport avec le ressaut de la glace 5, qui est simplement dictée par des impératifs d'installation du module lumineux sur le véhicule.

Mais le procédé de réalisation par moulage de la glace et du boîtier entraîne des variations dimensionnelles qui sont dues aux tolérances fixées pour la fabrication. Cela peut se traduire, dans certains cas, au niveau des ressauts de ces deux pièces, par un décalage longitudinal "d" et, par conséquent par un espace qui est laissé vide entre les faces du ressaut de la glace et du boîtier qui sont orientées sensiblement verticalement.

Compte tenu de la relative verticalité de la face inférieure 52 de la glace et de la face supérieure 61 du boîtier au niveau du ressaut, l'écart longitudinal d dû aux tolérances se traduit par un écart vertical "h" important entre ces deux faces. Compte tenu de quasi-verticalité des faces des deux pièces au niveau du ressaut, la valeur h, dans le cas de la figure 2, est très proche de l'élévation H du ressaut. Lorsque le faisceau laser, qui est orienté selon l'axe 21, passe au dessus de cet espace vide il atteint la face supérieure 61 du boîtier en un point qui est relativement éloigné de la face inférieure 52 de la glace. Son échauffement ne se transmet pas à la glace, qui ne peut fondre et se souder au collet du boîtier ; le soudage est alors défectueux en ce point.

Pour pallier cet inconvénient les formes de la glace et du boîtier, au niveau du ressaut, sont modifiées comme illustré sur la figure 3. Alors que la face supérieure 51 de la glace conserve la même forme en escalier (caractérisée par les mêmes valeurs H et D2) que précédemment, sa face inférieure 52 s'éloigne de cette forme en escalier et reste peu inclinée par rapport à l'horizontale. Le ressaut pour cette face inférieure, dont l'élévation reste égale à la valeur H, est développé longitudinalement sur une longueur D3 qui est beaucoup plus importante que précédemment, ce qui fait que sa pente reste toujours faible par rapport à l'horizontale.

Il en est de même pour la face supérieure 61 du boîtier 6 qui reproduit, comme précédemment, la forme de la face inférieure de la glace 5.

Ces deux faces sont positionnées en vis-à-vis, c'est-à-dire qu'elles sont au contact l'une de l'autre, aux tolérances "d" de fabrication près, du fait de l'analogie de leurs formes. Par analogue on entend que ces formes se déduisent sensiblement l'une de l'autre par une translation selon la direction longitudinale.

En conséquence un même écart longitudinal d, comme le précédent, entre la position du ressaut sur la glace 5 et sur celui du boîtier 6 se traduit, ici, par un écart vertical h entre les deux pièces qui est très fortement réduit. Même si, dans ce cas, il traverse une plus grande épaisseur de la glace avant de parvenir à la face supérieure 61 du boîtier 6, le faisceau laser apportera de la chaleur à cette face supérieure 61 qui pourra alors se transmettre à la face inférieure 52 de la glace 5. Celle-ci pourra alors fondre et former un cordon de soudure avec la face supérieure du boîtier. Le soudage des deux pièces pourra être correctement réalisé, malgré la présence d'un ressaut important pour la glace 5 sur sa face supérieure 51.

Pour minimiser la hauteur h de l'espace vide entre la face inférieure 52 de la glace et la face supérieure 61 du boîtier, la forme donnée à ces deux faces au niveau du ressaut est préférentiellement une forme en S, allongée longitudinalement. Cette forme en S se raccorde, de préférence, tangentiellement au plan de la face inférieure 52 de la glace et/ou de la face supérieure 61 du boîtier, de chaque côté dudit ressaut. Et pour minimiser sa hauteur, cette forme en S se déploie, tout en restant verticalement entre les tangentes aux faces correspondantes, qui s'étendent de chaque côté du ressaut.

Telle que représentée sur la figure 3, la forme en S a l'allure d'une branche de sinusoïde, avec une première partite convexe, se poursuivant par une partie concave, en passant par un point de changement du signe de sa courbure. Avec les ressauts généralement constatés sur les modules lumineux de véhicules automobiles, dont la hauteur est inférieure ou égale à 4 mm, on considère que le rayon de courbure de la forme en S doit toujours rester supérieur à 5mm pour que l'écart vertical h entre la face inférieure 52 de la glace 5 et la face supérieur 61 du boîtier 6 reste compatible d'un soudage par laser.

Dans une variante d'exécution de l'invention, le second ressaut est décalé longitudinalement vis-à-vis du premier ressaut. De préférence une partie du premier ressaut couvre une partie du deuxième ressaut. Le décalage peut être par exemple de 0,1 à 0,5 mm.

On remarque par ailleurs, que la face inférieure 62 du boîtier 6 n'est pas impactée par l'invention et qu'elle peut prendre toute forme rendue nécessaire par l'installation du module lumineux sur le véhicule. Elle peut, notamment, s'écarter sensiblement de sa face supérieure 61 pour s'adapter à la structure du véhicule, ou bien lui rester sensiblement parallèle pour minimiser la quantité de matière mise en oeuvre dans la fabrication du boîtier.

## Revendications

1. Boîtier pour la réalisation d'un module, notamment lumineux, pour véhicule automobile, par soudage, notamment par soudage laser, sur lui d'une glace pour la réalisation du module, ladite glace (5) comportant une face supérieure (51) et une face inférieure (52), au moins une partie de la périphérie de ladite face inférieure de la glace étant conformée pour être soudée sur un boîtier (6), ladite face supérieure (51) comportant en au moins un point de ladite partie de la périphérie un premier ressaut vertical, ladite glace (5) comportant sur sa face inférieure (52), un second ressaut, ledit second ressaut ayant une forme en S se raccordant tangentiellement à la face inférieure, de part et d'autre dudit second ressaut, ledit boîtier comportant une nervure de soudage (6b) s'étendant à partir d'un collet (6a) comportant une face supérieure (61) et une face inférieure (62), ladite face supérieure (61) comportant un troisième ressaut analogue au second ressaut de ladite glace (5), ledit troisième ressaut étant positionné longitudinalement de façon à se retrouver sensiblement en vis-à-vis du second ressaut lors de l'installation de ladite glace (5) sur ledit boîtier (6).

2. Boîtier selon la revendication 1, dans lequel la face inférieure (62) dudit boîtier évolue longitudinalement, au niveau dudit troisième ressaut, en restant sensiblement parallèle à ladite face supérieure (61) du collet (6a).

3. Boîtier selon la revendication 1, dans lequel la face inférieure (62) dudit boîtier évolue longitudinalement, au niveau dudit troisième ressaut, en s'écartant sensiblement de ladite face supérieure (61) du collet (6a).

4. Module, notamment lumineux, pour véhicule automobile réalisé par soudage, notamment par soudage laser, d'une glace (5) sur un boîtier selon l'une des revendications 1 à 3, la glace (5) comportant une face supérieure (51) et une face inférieure (52), au moins une partie de la périphérie de ladite face inférieure de la glace étant conformée pour être soudée sur un boîtier (6), ladite face supérieure (51) de la glace (5) comportant en au moins un point de ladite partie de la périphérie un premier ressaut vertical, la glace comportant sur sa face inférieure (52), un second ressaut, ledit second ressaut ayant une forme en S se raccordant tangentiellement à la face inférieure de la glace (5), de part et d'autre dudit second ressaut

5. Module selon la revendication 4, dans lequel le premier ressaut présente un profil identique à celui du second ressaut.

6. Module selon l'une des revendications 4 ou 5, dans lequel le premier ressaut présente un profil plan.

7. Module selon l'une des revendications 4 à 6, dans lequel la face supérieure (51) de la glace (5) présente deux parties majoritairement planes de part et d'autre du premier ressaut.

8. Module selon l'une des revendications 4 à 7, dans lequel la face inférieure (52) de la glace (5) présente deux parties majoritairement planes de part et d'autre du premier ressaut.

9. Module selon l'une des revendications 4 à 8, dans lequel la forme en S présente un profil continu en tout point de cette forme.

10. Module selon l'une des revendications 4 à 9, dans lequel la forme en S présente au moins trois portions, dont deux sont tangentes à la face inférieure de la glace (5), respectivement de part et d'autre de ladite forme en S, la troisième portion étant plane et s'étendant entre lesdites deux portions

11. Module selon l'une des revendications 4 à 10, dans lequel le second ressaut s'étend longitudinalement au niveau du premier ressaut de la face supérieure (51) de la glace (5).

12. Module selon l'une des revendications 4 à 11, dans lequel, ledit premier ressaut **se caractérisant par** son élévation verticale H sur une distance longitudinale D, ledit second ressaut se **caractérise par** un rapport entre son élévation verticale et la distance longitudinale correspondante, qui est inférieur ou égal à celui de ladite face supérieure de la glace (5).

13. Module selon l'une des revendications 4 à 12, dans lequel la forme en S se raccorde à la face inférieure (52) de la glace (5) en restant positionnée entre les tangentes à cette face de chaque côté dudit second ressaut.

14. Module selon l'une des revendications 4 à 13, dans lequel le rayon de courbure de ladite forme en S est, en tout point du second ressaut, supérieur ou égal à 5 mm.

## Patentansprüche

1. Gehäuse für die Ausführung eines Moduls, insbesondere Leuchtmoduls, für ein Kraftfahrzeug durch Schweißen, insbesondere Laserschweißen, an selbiges einer Scheibe zur Ausführung des Moduls, wobei die Scheibe (5) eine obere Fläche (51) und eine untere Fläche (52) aufweist, wobei zumindest ein Teil des Umfangs der unteren Fläche der Scheibe dazu angepasst ist, an ein Gehäuse (6) geschweißt zu werden, wobei die obere Fläche (51) an zumindest einem Punkt des Teils des Umfangs einen ersten vertikalen Vorsprung aufweist, wobei die Scheibe (5) auf ihrer unteren Fläche (52) einen zweiten Vorsprung aufweist, wobei der zweite Vorsprung eine S-Form aufweist, die auf beiden Seiten des zweiten Vorsprungs tangential in die untere Fläche übergeht, wobei das Gehäuse eine Schweißrippe (6b) aufweist, die sich von einem Kragen (6a) erstreckt, der eine obere Fläche (61) und eine untere Fläche (62) aufweist, wobei die obere Fläche (61) einen zum zweiten Vorsprung der Scheibe (5) analogen dritten Vorsprung aufweist, wobei der dritte Vorsprung längs so positioniert ist, dass er sich bei der Installation der Scheibe (5) am Gehäuse (6) im Wesentlichen gegenüber dem zweiten Vorsprung befindet.

2. Gehäuse nach Anspruch 1, wobei die untere Fläche (62) des Gehäuses im Bereich des dritten Vorsprung längs so verläuft, dass sie im Wesentlichen parallel zur oberen Fläche (61) des Kragens (6a) bleibt.

3. Gehäuse nach Anspruch 1, wobei die untere Fläche (62) des Gehäuses im Bereich des dritten Vorsprungs längs so verläuft, dass sie sich im Wesentlichen von der oberen Fläche (61) des Kragens (6a) entfernt.

4. Modul, insbesondere Leuchtmodul, für ein Kraftfahrzeug, das durch Schweißen, insbesondere Laserschweißen, einer Scheibe (5) an ein Gehäuse nach einem der Ansprüche 1 bis 3 ausgeführt wird, wobei die Scheibe (5) eine obere Fläche (51) und eine untere Fläche (52) aufweist, wobei zumindest ein Teil des Umfangs der unteren Fläche der Scheibe dazu angepasst ist, an ein Gehäuse (6) geschweißt zu werden, wobei die obere Fläche (51) der Scheibe (5) an zumindest einem Punkt des Teils des Umfangs einen ersten vertikalen Vorsprung aufweist, wobei die Scheibe auf ihrer unteren Fläche (52) einen zweiten Vorsprung aufweist, wobei der zweite Vorsprung eine S-Form aufweist, die auf beiden Seiten des Vorsprungs tangential in die untere Fläche der Scheibe (5) übergeht.

5. Modul nach Anspruch 4, wobei der erste Vorsprung ein Profil aufweist, das identisch mit dem des zweiten Vorsprungs ist.

6. Modul nach einem der Ansprüche 4 oder 5, wobei der erste Vorsprung ein ebenes Profil aufweist.

7. Modul nach einem der Ansprüche 4 bis 6, wobei die obere Fläche (51) der Scheibe (5) auf beiden Seiten des ersten Vorsprungs zwei überwiegend ebene Teile aufweist.

8. Modul nach einem der Ansprüche 4 bis 7, wobei die untere Fläche (52) der Scheibe (5) auf beiden Seiten des ersten Vorsprungs zwei überwiegend ebene Teile aufweist.

9. Modul nach einem der Ansprüche 4 bis 8, wobei die S-Form an jedem Punkt dieser Form ein kontinuierliches Profil aufweist.

10. Modul nach einem der Ansprüche 4 bis 9, wobei die S-Form zumindest drei Abschnitte aufweist, wovon zwei Tangenten zur unteren Fläche der Scheibe (5) auf der einen bzw. der anderen Seite der S-Form sind, wobei der dritte Abschnitt eben ist und sich zwischen den beiden Abschnitten erstreckt.

11. Modul nach einem der Ansprüche 4 bis 10, wobei sich der zweite Vorsprung längs im Bereich des ersten Vorsprungs der oberen Fläche (51) der Scheibe (5) erstreckt.

12. Modul nach einem der Ansprüche 4 bis 11, wobei sich der erste Vorsprung durch seine vertikale Erhöhung H über einen Längsabstand D kennzeichnet, wobei sich der zweite Vorsprung durch ein Verhältnis zwischen seiner vertikalen Erhöhung und dem entsprechenden Längsabstand, das kleiner als oder so groß wie das der oberen Fläche der Scheibe (5) ist, kennzeichnet.

13. Modul nach einem der Ansprüche 4 bis 12, wobei die S-Form in die untere Fläche (52) der Scheibe (5) übergeht und zwischen den Tangenten zu dieser Fläche auf jeder Seite des zweiten Vorsprungs positioniert bleibt.

14. Modul nach einem der Ansprüche 4 bis 13, wobei der Krümmungsradius der S-Form an jedem Punkt des zweiten Vorsprungs größer als oder gleich 5 mm ist.

## Claims

1. Housing for creating a module, notably a lighting module, for a motor vehicle, by welding, notably by laser welding, to it an outer lens in order to create the module, the said outer lens (5) comprising an upper face (51) and a lower face (52), at least a part of the periphery of the said lower face of the outer lens being configured to be welded to a housing (6), the said upper face (51) comprising, at least at one point on the said part of the periphery, a vertical first discontinuity, the said outer lens (5) comprising, on its lower face (52), a second discontinuity, the said second discontinuity being S-shaped and connecting tangentially to the lower face, on each side of the said second discontinuity, the said housing comprising a welding rib (6b) extending from a flange (6a), comprising an upper face (61) and a lower face (62), the said upper face (61) comprising a third discontinuity similar to the second discontinuity of the said outer lens (5), the said third discontinuity being positioned longitudinally in such a way as to lie substantially facing the second discontinuity when the said outer lens (5) is installed on the said housing (6) .

2. Housing according to Claim 1, in which the lower face (62) of the said housing evolves longitudinally, at the level of the said third discontinuity, while remaining substantially parallel to the said upper face (61) of the flange (6a).

3. Housing according to Claim 1, in which the lower face (62) of the said housing evolves longitudinally, at the level of the said third discontinuity, significantly diverging from the said upper face (61) of the flange (6a).

4. Module, notably a lighting module, for a motor vehicle, created by welding, notably by laser welding, an outer lens (5) to a housing according to one of Claims 1 to 3, the outer lens (5) comprising an upper face (51) and a lower face (52), at least a part of the periphery of the said lower face of the outer lens being configured to be welded to a housing (6), the said upper face (51) of the outer lens (5) comprising, at least at one point on the said part of the periphery, a vertical first discontinuity, the outer lens comprising, on its lower face (52), a second discontinuity, the said second discontinuity being S-shaped and connecting tangentially to the lower face of the outer lens (5), on each side of the said second discontinuity.

5. Module according to Claim 4, in which the first discontinuity has a profile identical to that of the second discontinuity.

6. Module according to one of Claims 4 and 5, in which the first discontinuity has a planar profile.

7. Module according to one of Claims 4 to 6, in which the upper face (51) of the outer lens (5) has two predominantly planar parts, one on each side of the first discontinuity.

8. Module according to one of Claims 4 to 7, in which the lower face (52) of the outer lens (5) has two predominantly planar parts, one on each side of the first discontinuity.

9. Module according to one of Claims 4 to 8, in which the S-shape exhibits a profile that is continuous at every point on this shape.

10. Module according to one of Claims 4 to 9, in which the S-shape exhibits at least three portions, of which two are tangential to the lower face of the outer lens (5), respectively one on each side of the said S-shape, the third portion being planar and extending between the said two portions.

11. Module according to one of Claims 4 to 10, in which the second discontinuity extends longitudinally at the level of the first discontinuity of the upper face (51) of the outer lens (5).

12. Module according to one of Claims 4 to 11, in which, with the said first discontinuity being **characterized by** its vertical elevation H over a longitudinal distance D, the said second discontinuity is **characterized by** a ratio between its vertical elevation and the corresponding longitudinal distance which is less than or equal to that of the said upper face of the outer lens (5).

13. Module according to one of Claims 4 to 12, in which the S-shape connects to the lower face (52) of the outer lens (5) while remaining positioned between the tangents to this face on each side of the said second discontinuity.

14. Module according to one of Claims 4 to 13, in which the radius of curvature of the said S-shape is greater than or equal to 5 mm at every point on the second discontinuity.
